# EUROPEAN PATENT SPECIFICATION

(11) **EP 0 882 672 B1**
(45) Date of publication and mention of the grant of the patent: **16.05.2001**
(21) Application number: 98304457.9
(22) Date of filing: 05.06.1998
(51) Int. Cl.: C01B 31/04, F27B 9/14

(54) **Graphitising electric furnace**
Elektrischer Ofen zur Graphitisierung
Four électrique de graphitisation

(30) Priority: 05.06.1997 JP 14778197; 07.05.1998 JP 12479498
(43) Date of publication of application: 09.12.1998
(73) Proprietor: ISHIKAWAJIMA-HARIMA JUKOGYO KABUSHIKI KAISHA, Chiyoda-ku Tokyo-to (JP)
(72) Inventor: Mochizuki, Chitoshi, Yokohama-shi, Kanagawa-ken (JP)
(74) Representative: Jennings, Nigel Robin

(56) References cited:
- EP-A- 0 311 538
- EP-A- 0 610 704
- DE-C- 550 053
- FR-A- 628 168
- FR-A- 921 337
- FR-A- 2 293 681
- GB-A- 2 185 559
- US-A- 5 626 249
- PATENT ABSTRACTS OF JAPAN vol. 015, no. 436 (C-0882), 7 November 1991 & JP 03 183607 A (ISHIKAWAJIMA HARIMA HEAVY IND CO LTD), 9 August 1991
- PATENT ABSTRACTS OF JAPAN vol. 015, no. 436 (C-0882), 7 November 1991 & JP 03 183608 A (ISHIKAWAJIMA HARIMA HEAVY IND CO LTD;OTHERS: 01), 9 August 1991
- PATENT ABSTRACTS OF JAPAN vol. 015, no. 256 (C-0845), 28 June 1991 & JP 03 083809 A (OSAKA GAS CO LTD;OTHERS: 01), 9 April 1991

## Description

The present invention relates to a graphitising electric furnace.

Conventionally, artificial graphite powder has been produced industrially by graphitising carbon powder by heat treatment under an inert atmosphere at a temperature of about 3000°C or more.

For such production of graphite powder, a graphitising electric furnace, such as an Acheson furnace, has been used in which carbon powder is graphitised by resistive heating by the direct supply of electric current to the carbon powder. Generally, known graphitising electric furnaces are designed to produce graphite powder in batch production mode, resulting in low productivity. There has, therefore, been a substantial demand for the development of a graphitising electric furnace capable of continuously producing graphite powder by heat treatment of carbon powder.

However, most of the continuous graphitising electric furnaces as currently proposed are based on the principle that carbon powder is charged into a space between a pair of graphite electrodes and electric current is supplied to the electrodes while the carbon powder is moving, thereby heating the carbon powder by resistive heating. The graphite electrodes themselves are also resistively heated and act as heaters for maintaining the temperature inside the furnace at about 3000°C or more so as to continuously graphitise the carbon powder, which results inevitably in sublimation and wear of the graphite electrode since they are exposed to temperatures of 3000°C or more. Wear of the graphite electrodes has been and is a great obstacle to the practical realisation of continuous graphitising electric furnaces.

More specifically, a graphitising electric furnace of continuous type is known including a pair of opposed graphite electrodes in the form of a pipe within the furnace body. The electrodes are used as a carbon powder inlet and the graphite powder collecting port, respectively. When carbon powder is charged into the furnace body and an electric current is applied, the electrodes themselves are heated and act as heaters. The carbon powder within the electrodes is resistively heated and graphitised. It was thought the graphite powder could be produced continuously in such a furnace by continuously supplying carbon powder to one end of the graphite electrodes pipe and continuously removing graphite powder from the other end. However, it was also thought that the high temperature graphite powder end of the graphite electrode pipe would have a very short service life because it is always exposed to high temperature and is easily sublimated.

It is the object of the present invention to solve the above and other problems and to provide a graphitising electric furnace which enables the continuous production of graphite powder by heating carbon powder to a high temperature without necessarily using graphite electrodes.

According to the present invention there is provided a graphitising electric furnace comprising a furnace body having a carbon powder inlet and a graphite powder collecting port opposed thereto which lie on a first hypothetical line, means for continuously supplying carbon powder to the carbon powder inlet and means for continuously removing graphite powder from the graphite powder collecting port, and at least one pair of opposed electrodes, which lie on a second hypothetical line, a graphitising area being defined between the inlet and collecting port, the first and second hypothetical lines intersecting substantially at the centre of the graphitising area.

In use, the furnace in accordance with the present invention is substantially full of carbon powder and graphite powder. Carbon powder is supplied continuously to the carbon powder inlet and graphite powder withdrawn continuously though the graphite powder collecting port. There is thus a continuous moving column of carbon powder/graphite powder between the inlet and the collecting portion which is surrounded by a substantially stationary body of carbon powder. When the pair of electrodes is energised, the carbon powder between the electrodes is subjected to resistive heating but the carbon powder adjacent the edge of the furnace body remains relatively cool because it is cooled by the wall of the furnace body which is cooled e.g. by natural air cooling and/or by virtue of the fact that the furnace body is of water cooled construction. However, the carbon powder in the central region between the pair of electrodes is insulated by the carbon powder around it and is thus heated to a high temperature. This central area constitutes the graphitising area whose position is defined by the position of the electrodes. The carbon powder within the graphitising area is thus locally heated to a high temperature and is graphitised. Thus graphite powder is continuously produced within the graphitising area and is progressively moved towards the collecting port and withdrawn. As mentioned above, the carbon powder adjacent to the furnace wall and surrounding the electrodes is maintained at a relatively low temperature and does not move which means that heat damage and abrasion of the furnace body and electrodes is substantially eliminated.

Whilst a single pair of opposed electrodes may be used, it is preferred that there is plurality of pairs of opposed electrodes, the electrodes of each pair lying on a hypothetical line, all the hypothetical lines intersecting substantially at a single point, which point will in practice constitute the centre of the graphitising area. It is preferred also that there is a current controller arranged to supply electric power to the electrodes of each opposed pair, the controller being arranged to supply power to the pairs of electrodes sequentially. This means in practice that the pairs of electrodes are energised one after the other and this is of importance because if two or more pairs of electrodes were ever energised at the same time the current from one electrode would not necessarily flow to the opposed electrode but to some other electrode which would mean that the current flowing between these two electrodes would not necessary flow through the graphitising area. When two or more pairs of electrodes are provided the carbon powder within the graphitising area will of course be subjected to a substantially greater resistive heating effect than all the other carbon powder within the furnace thereby enhancing the local heating of the graphite powder within the graphitising area. This effect is further promoted by the fact that graphitised carbon powder has a lower volumetric resistively.

In the preferred embodiment, the furnace body has a cylindrical barrel portion, the carbon powder inlet being arranged centrally at the top of the furnace body, the graphite powder collecting port being arranged centrally at the bottom of the furnace body, the electrodes being disposed in an annular arrangement on the inner wall of furnace body, each pair of electrodes being diametrically opposed across the barrel portion of the furnace body.

Two specific embodiments of the invention will now be described below with reference to the accompanying drawings in which:
Figure 1 is a sectional view of one embodiment of the graphitising furnace according to the invention;
Figure 2 is a view in the direction of the arrows II-II in Fig. 1;
Figure 3 is a sectional view of the second embodiment of the present invention; and
Figure 4 is a view in the direction of the arrows IV-IV in Fig. 3.

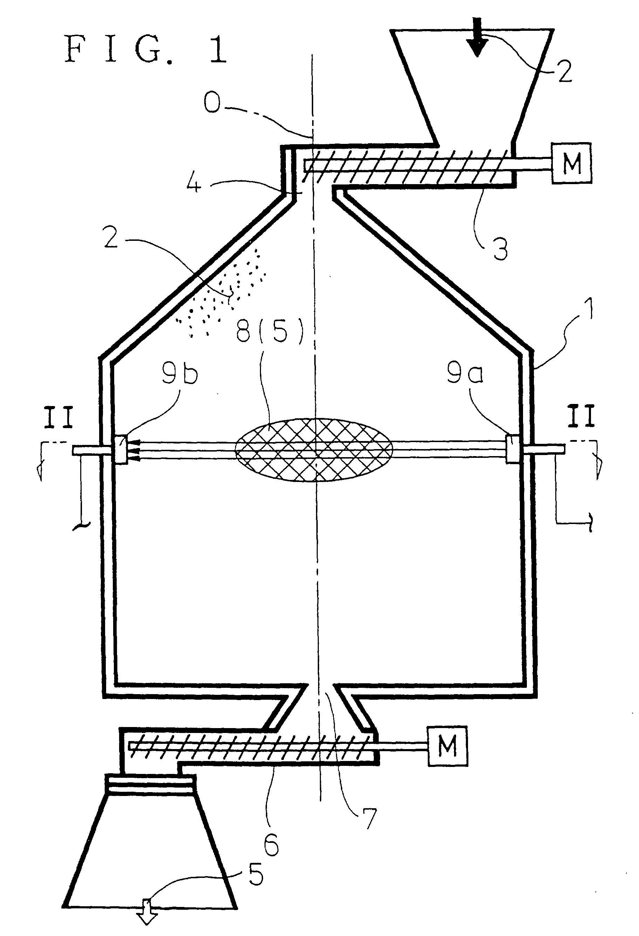

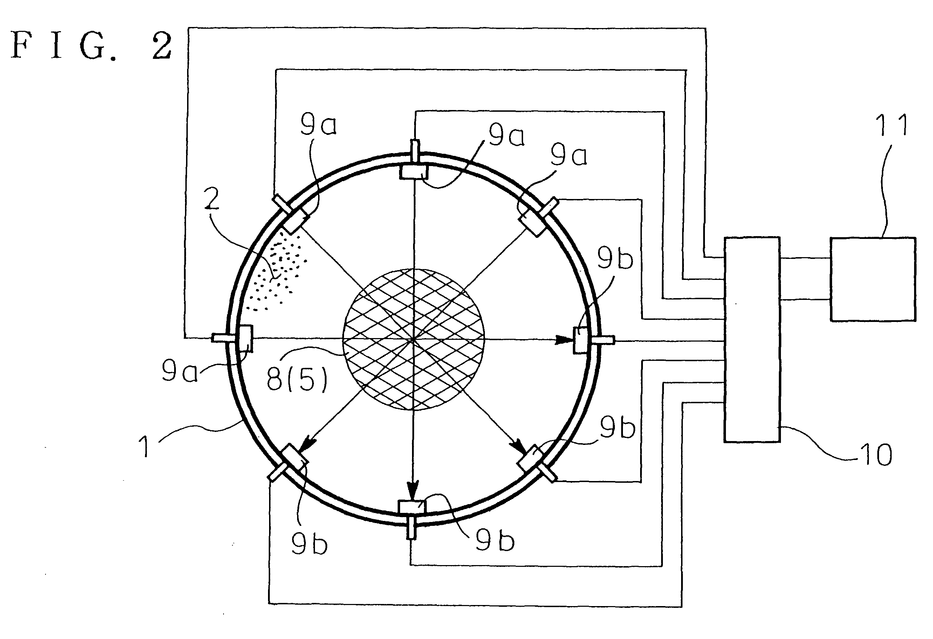

The furnaces shown in Figs. 1 and 2 includes a furnace body 1 of water-cooled construction. Furnace body 1 has a carbon powder inlet centrally at the top of the furnace body 1 so that carbon powder 2 can be continuously charged into the furnace, in this case by means of a screw conveyor 3. Furnace body 1 has a graphite powder collecting port 7 centrally at the bottom of the furnace body 1 so the graphite powder 5 produced by heat treatment of the carbon powder 2 may be continuously removed and collected by means of a screw conveyor 6. The furnace body 1 is filled with argon or some other inert gas or is under a vacuum so as to prevent air from coming into contact with the carbon and graphite powder. The furnace body 1 comprises a cylindrical barrel-shaped portion topped by a conical portion and having a base in the form of a flat disk. The furnace body 1 has an axis O on which the inlet 4 and the collecting port 7 are arranged.

The water-cooled structure of the furnace body 1 may be of conventional type. More specifically, the wall of the furnace body 1 may be in the form of a water-cooled jacket or may have a plurality of flow passages for the circulation of cooling water or other cooling medium

The inlet port and collecting port 7 lie on a first hypothetical line constituted by the axis O. The inner wall of the furnace body 1 is provided with four pairs of diametrically opposed electrodes 9a, 9b which are made of copper or other metallic or conductive material and are equispaced from one another. The electrodes of each pair lie on respective hypothetical lines, all of which intersect with one another and the first hypothetical line O substantially at a single point. This point represents a centre of a graphitising area or volume 8 in which, in practice, the majority of the graphitisation takes place. The electrodes 9a and 9b of each pair, which are diametrically opposed with respect to the graphitising area 8, are connected via an electric current controller 10 to a power supply 11. The controller is arranged such that electric current is supplied to the pairs of electrodes sequentially, that is to say at different times one after the other.

The inside wall of the surface of the furnace body 1 adjacent to the electrodes 9a and 9b must of course be electrically insulated and the wall of the furnace body 1 which contacts the carbon powder should be made of ceramics, hard plastics or other insulating material. The power source 11 may be an AC or DC power source.

Carbon powder 2 is charged continuously into the furnace body 1 through the carbon powder inlet 4 and the respective pairs of electrodes 9a and 9b are energised sequentially at different times by the power source 11 via the current controller 10. Electric current flows between the electrodes of each pair of electrodes 9a and 9b and resistively heats the graphite between them. However, the carbon powder near the wall of the furnace body 1 remains relatively cool due to the fact that the furnace body is cooled and heat is lost from it by radiation and/or conduction. However, the carbon powder in centre of the furnace is insulated by the powder around it and it is therefore heated to a greater extent within a certain volume, namely the graphitising area 8. It is in this area that the carbon powder is heated by all the pairs of electrodes. Furthermore, carbon powder in the graphitising area 8 has a lower volumetric resistively so that the graphitising area 8 has a higher current density than the surrounding carbon powder and is therefore heated to a greater extent by resistive heating. As a result, it is only carbon powder 2 in the graphitising area 8 which is locally heated to a sufficiently high temperature to be graphitised.

Graphite powder 5 may thus be continuously produced by collecting the graphite powder 5 graphitised in the graphitising area 8 at the collecting port 7 whilst fresh carbon powder 2 is charged though the inlet 4 into the furnace body 1.

The carbon powder surrounding and enclosing the moving column and/or graphite powder between the inlet 4 and collecting port 7 remains substantially stationary inside the furnace body 1. The carbon powder at the core of the furnace body is therefore graphitised while the surrounding carbon powder adjacent to the furnace wall insulates the furnace body and the electrodes. The graphitising area 8 is thus maintained at a high temperature while the inner wall of the furnace body 1 is maintained at a low temperature. No impurities can contaminate the graphite powder 5 collected at the collecting port 7 since there are no materials within the furnace body 1 other than the carbon powder constituting the raw material. The pure graphite powder 5 is collected at a position at which its temperature has decreased from the graphitising temperature. Heat damage to the furnace body 1 and the electrodes 9a and 9b is thus prevented, thereby improving the service life of the furnace body 1 and the electrodes 9a and 9b. Even if the electrodes are made of graphite there is no substantial risk of damage to them

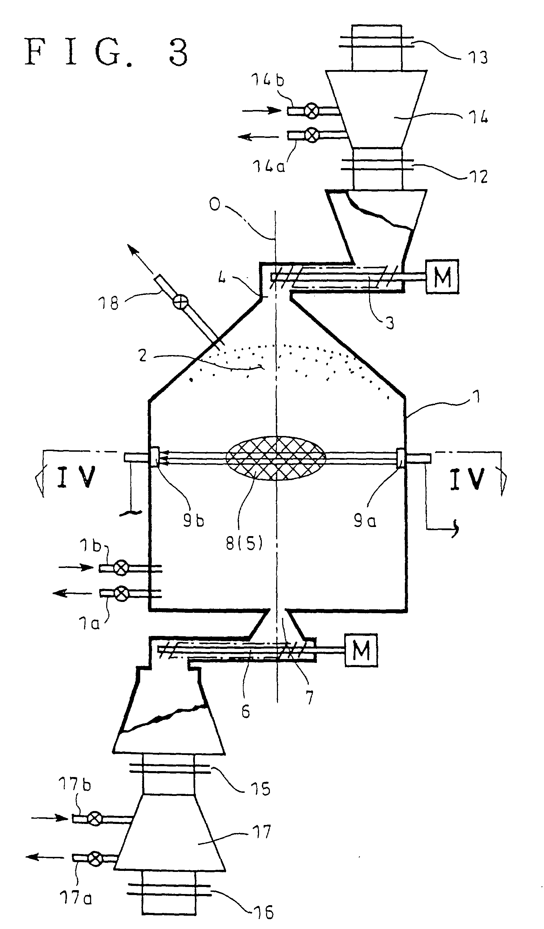

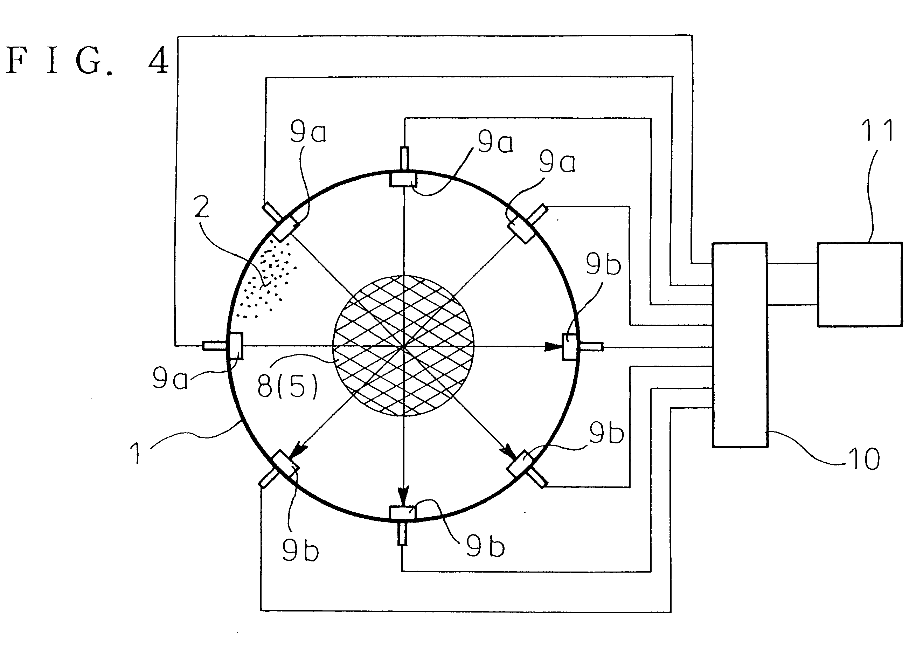

Figs. 3 and 4 show a further embodiment of the invention. In this embodiment, the furnace body 1 is not of water-cooled type but the inner wall of the furnace body 1 is maintained relatively cool by the cooling effect of natural air cooling.

Fig. 3 shows specific means for maintaining a nitrogen, argon or other inert gas atmosphere within the furnace. The furnace body 1 has, near its base, exhaust and inert gas supply pipes 1a and 1b leading to a vacuum pump (not shown) and an inert gas supply (not shown) respectively. Extraction of gas through the exhaust pipe la and subsequent introduction of inert gas though the inert gas 1b will provide an inert gas atmosphere within the furnace.

Arranged up-stream of the screw conveyor 3 for supplying carbon powder 2 through the inlet 4 are valve means comprising ball valve 12 and 13 defining between them an intermediate chamber or "air lock" 14. Communicating with the intermediate chamber 14 are exhaust and inert gas supply pipes 14a and 14b to provide a nitrogen, argon or other inert gas atmosphere in the chamber 14.

When the carbon powder 2 is to be charged through the inlet 4 into the furnace body, it is firstly charged into the chamber 14 with the upper and lower valve 13 and 12 being opened and closed, respectively. The upper valve 13 is then closed. Air is extracted through the pipe 14a and inert gas, such as nitrogen or argon, is introduced through the pipe 14b to supply an inert gas atmosphere. The lower valve 12 is then opened to supply the carbon powder 2 from the chamber 14 to the inlet side of the screw conveyor 3. The carbon powder 2 can thus be charged into the furnace body 1 without external air, that is to say without oxygen.

A similar intermediate chamber 17 is also provided downstream of screw 6 for collecting graphite powder 5 through the collecting port 7 defined by valve means, constituted by ball valves 15 and 16, and communicating with exhaust and inert gas supply pipes 17a and 17b.

When graphite powder 5 is to be collected though the collecting port 7, air is extracted from the chamber 17 though the pipe 17a with the valves 15 and 16 closed. Nitrogen, argon or other inert gas is introduced through the pipe 17b to provide an inert gas atmosphere within the chamber 17. The upper valve 15 is then opened to displace the graphite powder into the chamber 17 and the upper valve 15 is closed. The lower valve 16 is then opened. The graphite powder can thus be collected without air gaining access to the interior of the furnace body 1.

Reference numeral 18 represents a gas discharge pipe which is connected to the top of the furnace body 1 and is used to exhaust gas, such as methane, carbon monoxide or carbon dioxide, generated from the carbon powder 2 as a result of heating it to a high temperature.

It will be appreciated that numerous changes may be made to the embodiments described above. Thus the use of a plurality of pairs of electrodes 9a and 9b is not essential. For example, a single pair of laterally extending relatively elongate electrodes 9a and 9b may be arranged in the furnace body 1, which has a rectangular cross-section, opposed to one another with respect to the graphitising area 8 defined between them. The use of only one pair of electrodes enables the graphitising area 8 to be heated to a high temperature because of the cooling effect of the furnace wall and of the low volumetric resistivity of the graphitised powder.

More specifically, when the furnace body 1 is filled with nitrogen, argon or other inert gas, the heat transfer coefficient to the inner wall of the furnace body is increased, thereby decreasing the temperature on and adjacent to the inner wall of the furnace body 1, as a result of the effect of natural air cooling. On the other hand, the heat transfer coefficient between the particles of carbon powder is low so that the high-temperature graphitising area 8 is formed locally at the core of the furnace body due to the high insulating effect of the carbon powder surrounding the graphitising area. Attainment of these cooling and heat insulating effects to a substantial extent enables continuous graphitisation of the carbon powder, even if only one pair of opposed electrodes is used.

The carbon powder inlet and graphite powder collecting port may be opposed to one another in any direction other than vertical. The barrel of the furnace body may have a shape other than that shown in the drawings, e.g. it may have a polygonal or spherical shape. The electrodes may be opposed to one another three-dimensionally with respect to the graphitising area with the electrodes of the pairs being on different levels. Furthermore, the interior of the furnace body may operate under a vacuum instead of an inert gas atmosphere. In this case, the intermediate chambers defined by the pairs of valves at the carbon powder inlet and the graphite powder collecting port may also operate under a vacuum for charging the carbon powder and collecting the graphite powder.

## Claims

1. A graphitising electric furnace comprising a furnace body (1) having a carbon powder inlet (4) and a graphite powder collecting port (7) opposed thereto which lie on a first hypothetical line (O), means (3) for continuously supplying carbon powder to the carbon powder inlet and means (6) for continuously removing graphite powder from the graphite powder collecting port, and at least one pair of opposed electrodes (9a, 9b), which lie on a second hypothetical line, a graphitising area (8) being defined between the inlet (4) and collecting port (7), the first and second hypothetical lines intersecting substantially at the centre of the graphitising area (8).

2. A furnace as claimed in claim 1 including a plurality of pairs of opposed electrodes (9a,9b), the electrodes of each pair lying on a hypothetical line, all the hypothetical lines intersecting substantially at a single point.

3. A furnace as claimed in claim 2 including a current controller (10) arranged to supply electric power to the electrodes (9a,9b) of each opposed pair, the controller being arranged to supply power to the pairs of electrodes sequentially.

4. A furnace as claimed in claim 2 or 3 which the furnace body (1) has a cylindrical barrel portion, the carbon powder inlet (4) being arranged centrally at the top of the furnace body (1), the graphite powder collecting port (7) being arranged centrally at the bottom of the furnace body (1), the electrodes (9a,9b) being disposed in an annular arrangement on the inner wall of the furnace body (1), each pair of electrodes being diametrically opposed across the barrel portion of the furnace body.

5. A furnace as claimed in any one of the preceding claims in which the furnace body (1) is of water-cooled construction.

6. A furnace as claimed in any of the preceding claims in which the electrodes (9a,9b) are metallic.

7. A furnace as claimed in any of the preceding claims is which the carbon powder inlet (4) communicates with a chamber (14) through which carbon powder may be supplied to the furnace housing (1) and which may be sealed by valves (12,13) and which communicates with an exhaust line (14a) and/or an inert gas supply line.

8. A furnace as claimed in any one or the preceding claims in which the graphite powder collecting port (7) communicates with a chamber (17) through which graphite powder may be removed from the furnace housing (1) and which may be sealed by valves (15,16) and which communicates with an exhaust line (17a) and/or an inert gas supply line (17b)

9. A furnace as claimed in claim 7 or claim 8 in which the interior of the furnace housing (1) communicates with an exhaust line (1a) and/or an inert gas supply line (1b).

## Patentansprüche

1. Graphitbildender, elektrischer Ofen, umfassend einen Ofenkörper (1), der einen Kohlenstoffpulvereinlaß (4) und einen dazu gegenüberliegend angeordneten Graphitpulversammelauslaß (7) hat, die auf einer ersten hypothetischen Linie (O) liegen, Mittel (3), um kontinuierlich Kohlenstoffpulver dem Kohlenstoffpulvereinlaß zuzuführen und Mittel (6), um kontinuierlich Graphitpulver vom Graphitpulversamrnelauslaß zu entfernen und mit zumindest einem Paar einander gegenüberstehender Elektroden (9a, 9b), das auf einer zweiten hypothetischen Linie liegt, wobei zwischen dem Einlaß (4) und dem Sammalauslaß (7) ein graphitbildendes Gebiet (8) definiert ist und sich die erste und die zweite hypothetische Linie im wesentlichen im Zentrum des graphit-bildenden Gebietes (8) schneiden.

2. Ofen nach Anspruch 1, der eine Mehrzahl von Paaren von einander gegenüber angeordneten Elektroden (9a, 9b) umfaßt, wobei jedes Paar auf einer hypothetischen Linie liegt und alle hypothetischen Linien sich im wesentlichen in einem einzigen Punkt schneiden.

3. Ofen nach Anspruch 2, umfassend einen Stromregler (10), der so angeordnet ist, daß er elektrischen Strom den Elektroden (9a,9b) jedes einander gegenüber angeordneten Paares zuführt, wobei der Regler so ausgebildet ist, daß er den Elektrodenpaaren den Strom sequentiell zuführt.

4. Ofen nach Anspruch 2 oder 3, wobei der Ofenkörper (1) einen zylindrischen, faßartigen Abschnitt aufweist und der Kohlenstoffpulvereinlaß (4) zentral am Kopf des Ofenkörpers (1) angeordnet ist und der Graphitpulversammelauslaß (7) zentral am Boden des Ofenkörpers (1) angeordnet ist und wobei die Elektroden (9a, 9b) ringförmig an der Innenwand des Ofenkörpers (1) angeordnet sind, wobei jedes Paar von Elektroden einander am faßartigen Teil des Ofenkörpers diametral gegenübersteht.

5. Ofen nach einem der voranstehenden Ansprüche, bei dem der Ofenkörper (1) eine wassergekühlte Konstruktion ist.

6. Ofen nach einem der voranstehenden Ansprüche, bei dem die Elektroden (9a, 9b) metallisch sind.

7. Ofen nach einem der voranstehenden Ansprüche, bei dem der Kohlenstoffpulvereinlaß (4) mit einer Kammer (14) in Verbindung steht, durch die Kohlenstoffpulver dem Ofengehäuse (1) zugeführt werden kann und die durch Ventile (12, 13) verschlossen werden kann und mit einer Auslaßleitung (14a) und/oder einer Inertgasversorgungsleitung kommuniziert.

8. Ofen nach einem der voranstehenden Ansprüche, bei dem der Graphitpulversammelauslaß (7) mit einer Kammer (17) in Verbindung steht, durch die Graphitpulver aus dem Ofengehäuse (1) entnommen werden kann und die durch Ventile (15, 16) verschlossen werden kann und mit einer Auslaßleitung (17a) und/oder einer Inertgasversorgungsleitung (17b) kommuniziert.

9. Ofen nach Anspruch 7 oder 8, bei dem das Innere des Ofengehäuses (1) mit einer Auslaßleitung (1a) und/oder einer Inertgasversorgungsleitung (1b) kommuniziert.

## Revendications

1. Four électrique de graphitisation comprenant un corps de four (1) comportant un orifice d'entrée de poudre de carbone (4) et un orifice de collecte de poudre de graphite (7) opposé à celui-ci qui se situent sur une première ligne imaginaire (O), un moyen (3) destiné à fournir en continu de la poudre de carbone à l'orifice d'entrée de poudre de carbone et un moyen (6) destiné à enlever en continu la poudre de graphite depuis l'orifice de collecte de poudre de graphite, et au moins une paire d'électrodes opposées (9a, 9b), qui se situe sur une seconde ligne imaginaire, une région de graphitisation (8) étant définie entre l'orifice d'entrée (4) et l'orifice de collecte (7), les première et seconde lignes imaginaires se recoupant pratiquement au niveau du centre de la région de graphitisation (8).

2. Four selon la revendication 1, comprenant une pluralité de paires d'électrodes opposées (9a, 9b), les électrodes de chaque paire se situant sur une ligne imaginaire, la totalité des lignes imaginaires se recoupant pratiquement au niveau d'un seul point.

3. Four selon la revendication 2, comprenant un contrôleur de courant (10) agencé pour fournir une alimentation électrique aux électrodes (9a, 9b) de chaque paire opposée, le contrôleur étant agencé pour fournir une alimentation aux paires d'électrodes de façon séquentielle.

4. Four selon la revendication 2 ou 3, dont le corps de four (1) comporte une partie de fût cylindrique, l'orifice d'entrée de poudre de carbone (4) étant disposé au centre au niveau du sommet du corps de four (1), l'orifice de collecte de poudre de graphite (7) étant disposé au centre au niveau du fond du corps de four (1), les électrodes (9a, 9b) étant disposées suivant un agencement annulaire sur la paroi intérieure du corps de four (1), chaque paire d'électrodes étant diamétralement opposée à travers la partie de fût du corps de four.

5. Four selon l'une quelconque des revendications précédentes, dans lequel le corps de four(1) est de conception à refroidissement par eau.

6. Four selon l'une quelconque des revendications précédentes, dans lequel les électrodes (9a, 9b) sont métalliques.

7. Four selon l'une quelconque des revendications précédentes, dans lequel l'orifice d'entrée de poudre de carbone (4) communique avec une chambre (14) au travers de laquelle la poudre de carbone peut être fournie au corps de four (1) et qui peut être fermé hermétiquement par des vannes (12, 13) et qui communique avec une ligne d'évacuation (14a) et/ou une ligne d'alimentation en gaz inerte.

8. Four selon l'une quelconque des revendications précédentes, dans lequel l'orifice de collecte de poudre de graphite (7) communique avec une chambre (17) au travers de laquelle la poudre de graphite peut être enlevée du corps de four (1) et qui peut être fermé hermétiquement par des vannes (15, 16) et qui communique avec une ligne d'évacuation (17a) et/ou une ligne d'alimentation en gaz inerte (17b).

9. Four selon la revendication 7 ou la revendication 8, dans lequel l'intérieur du corps de four (1) communique avec une ligne d'évacuation (1a) et/ou une ligne d'alimentation en gaz inerte (1b).
